(19) Europäisches Patentamt
European Patent Office
Office européen des brevets

(11) **EP 4 632 506 A1**

(12) **EUROPEAN PATENT APPLICATION**

(43) Date of publication:
**15.10.2025  Bulletin 2025/42**

(21) Application number: **24202186.3**

(22) Date of filing: **24.09.2024**

(51) International Patent Classification (IPC):
**G05B 17/02** (2006.01)    **H02P 23/14** (2006.01)
**G05B 13/04** (2006.01)

(52) Cooperative Patent Classification (CPC):
**G05B 17/02;** G05B 13/048; H02P 23/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2024  US 202418633005**

(71) Applicant: **Hottinger Bruel & Kjaer Benelux B.V.
5145 NP Waalwijk (NL)**

(72) Inventors:
• **STOCK, Alexander Rudolf**
  **5145 NP Waalwijk (NL)**
• **MARKS, Mitchell Clayton**
  **5145 NP Waalwijk (NL)**
• **TREINIES, Sönke Timo**
  **5145 NP Waalwijk (NL)**
• **KEVENAAR, Thomas Andreas Maria**
  **5145 NP Waalwijk (NL)**

(74) Representative: **Guardian
IP Consulting I/S
Diplomvej, Building 381
2800 Kgs. Lyngby (DK)**

(54) **MAPPING AN OPERATIONAL CHARACTERISTIC OF A ROTARY SYSTEM**

(57)    The invention relates to systems and methods for mapping an operational characteristic of a first rotary system as a function of one or more operation parameters. The method comprising: obtaining seed data; obtaining a plurality of setpoints; obtaining a plurality of mapping data points; and generating interpolation data utilizing the plurality of mapping data points, wherein the seed data constitutes an initial dataset for the operational characteristic as a function of the one or more operation parameters for the first rotary system, and wherein the plurality of setpoints being obtained utilizing a prediction model, the seed data, and an a priori error setting, and wherein each mapping data point comprises an acquisition data component acquired utilizing one or more measurements of the first rotary system in response to control of the one or more operation parameters of the first rotary system in accordance with a respective setpoint.

Fig. 1

EP 4 632 506 A1

**Description**

FIELD OF THE INVENTION

The invention relates to systems and methods for mapping an operational characteristic (e.g., vibration, efficiency, heat generation, etc.) of a rotary system as a function of one or more operation parameters (e.g., input power conditions, load conditions, external heat conditions, etc.). The invention may apply to various rotary systems, such as electric motors, drivetrains, turbines, and internal combustion engines, etc.

BACKGROUND

A prominent example of mapping an operational characteristic of a rotary system is efficiency mapping of an electric motor. Such efficiency mapping is often obtained over the two operation parameters: speed (i.e., rotational speed) and torque, to understand how effectively the electric motor converts electrical energy into mechanical energy in dependence of these two operation parameters. Since the efficiency of an electric motor (or of other rotary systems) usually varies significantly based on the condition at which the rotary system operates, efficiency mapping of the respective rotary system is usually of importance for understanding and optimizing the performance hereof.

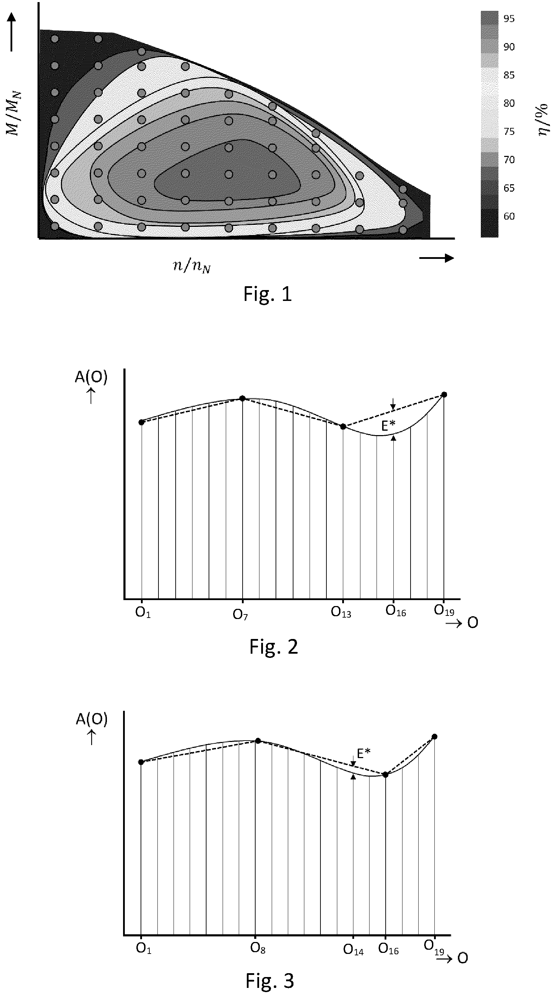

Efficiency mapping, e.g., of an electric motor, typically involves testing (i.e., mapping) the rotary system at various points of operation within an operation range of the one or more operation parameters with the aim to create a detailed dataset (i.e., mapping data), e.g., for illustration purposes. Efficiency mapping of an electric motor may involve setting up test conditions where the motor is run at various predetermined combinations of speeds and loads (i.e., torques). This may for instance involve using a dynamometer to control and measure the speed and load. For each point of operation, the electrical input power (based on voltage and current) and the mechanical output power (based on torque and speed) are usually measured. From these measurements, the efficiency may be calculated as the ratio of output power to input power for each point of operation. Data obtained utilizing one or more measurements based on one point of operation, which data represents a data point of the operational characteristic as a function of the one or more operation parameters, may be referred to as a "mapping data point". A collection of mapping data points may constitute or form part of the mapping data. The mapping data may include interpolated data points generated from the mapping data points and subsequently added to the mapping data. The mapping data may be plotted on a graph. For instance, for the above-referred example of efficiency as a function of speed and torque, with speed on one axis and torque on the other, the efficiency may be represented through colour coding or contours. Such graphical representation may be referred to as an efficiency map, or, in more general terms, a map. Such map provides a visual representation of the performance of the selected operational characteristic of the rotary system, e.g., electric motor, across the operation range of the one or more operation parameters. A conventional approach for efficiency mapping of an electric motor includes many consecutive measurements. Typically, a rectangular mesh of setpoints - a speed-torque grid - is chosen, where one measurement is to be carried out for each setpoint of the grid. An example hereof is illustrated by means of Fig. 1 schematically illustrating an exemplary efficiency map of an electric motor as a function of speed and torque, where the axes are labelled with normalized quantities, where $n/n_N$ represents the normalized speed, and $M/M_N$ represents the normalized torque. The efficiency map of Fig. 1 is an example of a graphical representation with contour lines and colour gradients indicating the efficiency $\eta/\%$ of the motor at different combinations of speed and torque. The upper right corner of the efficiency map is blank due to operational limits of the motor. A schematic example of measurement points within the operational limits of the motor is illustrated by the schematic mesh (size 9 by 8) of 54 circles, where, for the upper right corner, some of the mesh points have been downsized (i.e., moved down) in terms of torque value to not being outside the operational limits of the motor.

Furthermore, the set of measurements within a speed-torque grid, e.g., as described above, may be repeated in accordance with various reference conditions, such as for various ambient temperatures and/or various voltage levels of the electric motor, etc.

Mapping a desired operational characteristic of a rotary system as a function of one or more desired operation parameters is often an essential task for verifying the development progress of the respective rotary system. Data obtained utilizing such mapping is referred to as "mapping data". Such mapping data, e.g., from efficiency mapping, is usually essential for system designers to optimize the rotary system for specific applications. Similarly, for operation designers, mapping data is usually essential to enable the rotary system to be operated within a desired operation range, e.g., within its most efficient operation range, e.g., for saving energy and reducing costs. Furthermore, mapping data for rotary systems are usually essential for comparative analysis, e.g., to select specific rotary systems for specific applications based on performance. Furthermore, mapping data may be incorporated into control strategies, e.g., for electric vehicles or automated machinery, e.g., to enable that the rotary system operates efficiently.

SUMMARY

The total measurement series as described above for mapping, e.g., for obtaining an efficiency map, is usually relatively resource- and time consuming and is thus associated with high costs and may be a bottleneck in system development, system use, etc.

The inventors of the invention have realized a need to overcome the shortcomings of the prior art and a need for providing novel methods and systems for mapping an operational characteristic of a rotary system. Furthermore, the inventors have realized that the above-mentioned and other considerations apply not only for efficiency mapping for electric motors but for various rotary systems and for various operational characteristics hereof in dependence of various operation parameters hereof.

In the context of the invention, the terminology "mapping data" or "desired mapping data" may be understood as mapping data of a desired operational characteristic as a function of one or more desired operation parameters for a desired rotary system.

A first object of the invention is facilitating provision of mapping data.

A second object of the invention is facilitating a reduced need for measurement time or effort and/or facilitating another reduction in resources needed for provision of mapping data. Such reduction may for instance be assessed in comparison to the above-described or similar rectangular mesh of setpoints for measurements, such as within a speed-torque grid as described above.

A third object of the invention is facilitating provision of mapping data with improved data quality.

A fourth object of the invention is facilitating provision of a balance between the second and third object, i.e., a balance between reducing needed resources and improving data quality for obtaining mapping data.

Accordingly, it may be an object of the invention to enable adequate mapping data to be obtained while reducing the investment (e.g., of time, costs, or other resources) associated with obtaining the mapping data, e.g., striking a balance between data quality and investment for obtaining the data.

The invention may be provided according to any of the stated aspects. These aspects are provided and/or are intended to achieve one or more of the above-mentioned objectives and/or further objectives.

According to a first aspect of the invention there is provided a method for mapping. Mapping may imply that mapping data is obtained by the method. The method may be a computer-implemented method, such as having at least parts of the method or the entire method being computer-implemented. The method is configured for mapping an operational characteristic of a first rotary system as a function of one or more operation parameters. The mapping may be under a first reference condition, i.e., the first rotary system may be under influence of such first reference condition while being subject to respective measurements utilized for obtaining the mapping data.

The method of the first aspect comprises obtaining seed data, obtaining a plurality of setpoints, obtaining, e.g., receiving, a plurality of mapping data points, and optionally generating interpolation data utilizing the plurality of mapping data points.

The seed data preferably constitutes an initial dataset for or of the operational characteristic as a function of the one or more operation parameters for the first rotary system. In this context, the term "for" may be understood as suitable, applicable, or useful for. The seed data may be useful for an initial or preliminary description or representation of the operational characteristic of the first rotary system as a function of the one or more operation parameters. According to embodiments, the seed data is not necessarily based on measurements, nor is it necessarily based on the first rotary system, nor is it necessarily based on measurements of the first rotary system. According to embodiments, the seed data constitutes an initial dataset, which initial dataset is to be utilized for mapping the operational characteristic of the first rotary system as a function of the one or more operation parameters. According to embodiments, the seed data is suitable, applicable, or useful for the first rotary system. According to embodiments, the seed data is suitable, applicable, or useful for describing the operational characteristic as a function of the one or more operation parameters of the first rotary system. According to embodiments, the seed data is obtained from measurements of second rotary system different from the first rotary system. According to embodiments, the seed data is obtained from measurements of the first rotary system. According to embodiments, the seed data is obtained from a software model of the first rotary system.

According to the first aspect the plurality of setpoints comprises a first setpoint, a second setpoint, and optionally a third setpoint. Each setpoint comprises a component for each of the one or more operation parameters. According to the first aspect, the setpoints, i.e. the setpoints of the plurality of setpoints, are obtained utilizing a prediction model, the seed data, and an a priori error setting.

According to the first aspect the plurality of mapping data points comprises a first mapping data point, a second mapping data point, and optionally a third mapping data point. The number of mapping data points usually corresponds to the number of obtained and utilized setpoints. Each mapping data point comprises an acquisition data component acquired utilizing one or more measurements of the first rotary system in response to control of the one or more operation parameters of the first rotary system in accordance with a respective setpoint. Accordingly, the first mapping data point comprises an acquisition data component acquired in accordance with the first setpoint, the second mapping data point comprises an acquisition data component acquired in accordance with the second setpoint, and the optional third mapping data point comprises an acquisition data component acquired in accordance with the third setpoint.

The acquisition data component of a respective mapping data point may represent a value of the operational characteristic, such as a measured value hereof or a derived value based on one or more measurements. Each mapping data point usually comprises a component for each of the one or more operation parameters. Such a component may be denoted operation data component, control component, or input component. These one or more operation data components may be obtained utilizing one or more measurements of the first rotary system in response to the control of the one or more operation parameters of the first rotary system in accordance with a respective setpoint. Alternatively, or additionally, the one or more operation data components may be obtained based on the respective setpoints utilized for controlling the first rotary system. The step of obtaining the plurality of mapping data points may comprise receiving the acquisition data component or receiving data to be utilized for deriving the acquisition data component. Such data or data component may for instance be received from an automation system utilized for controlling the first rotary system. The step of obtaining the plurality of mapping data points may comprise combining received acquisition data components with corresponding setpoints or a component thereof and/or combining with one or more operation data components, e.g., received from the automation system.

According to a second aspect of the invention there is provided a management method comprising the method according to the first aspect of the invention. The management method comprises controlling the one or more operation parameters of the first rotary system in accordance with each respective setpoint; and acquiring each acquisition data component including carrying out the one or more measurements of the first rotary system utilized for acquiring each respective acquisition data component. Furthermore, the management method may comprise acquiring one or more operation data components, such as each operation data component.

The management method may be regarded as comprising a plurality of management steps. Each management step comprises control of the first rotary system in accordance with a respective setpoint. Furthermore, each management step comprises the one or more measurements of the first rotary system in response to the control of the first rotary system in accordance with the respective setpoint. The plurality of management steps comprises a first management step being in accordance with the first setpoint, a second management step being in accordance with the second setpoint, and optionally a third management step being in accordance with the third setpoint.

According to a third aspect of the invention there is provided a management system configured for carrying out the method of the second aspect. The management system may be configured for accommodating the first rotary system.

According to a fourth aspect of the invention there is provided a computer program comprising instructions which, when the program is executed by a computer, cause the computer to carry out the method of the first aspect.

According to a fifth aspect of the invention there is provided a computer-readable medium comprising instructions which, when executed by a computer, cause the computer to carry out the method of the first aspect.

According to a sixth aspect of the invention there is provided a data carrier signal carrying the computer program of the fourth aspect.

According to embodiments, the steps: obtaining the seed data; obtaining the plurality of setpoints; obtaining the plurality of mapping data points; and generating the interpolation data, are carried out and concluded in the stated order. According to embodiments, these steps are initiated but not necessarily concluded in the stated order. According to embodiments, the respective steps of obtaining the plurality of setpoints and obtaining the plurality of mapping data points are carried out stepwise and interchangeably.

It is to be understood that both the foregoing general description and the following detailed description are exemplary and are intended to provide further explanation of the invention as claimed. Other systems, methods and features of the invention will be or will become apparent to one having ordinary skill in the art upon examining the drawings and disclosure of the invention including the detailed description. It is intended that all such additional systems, methods, and features be included in this description, be within the scope of the invention and protected by the accompanying claims.

The present summary represents an overview of some of the teachings of the present disclosure and is not intended to be an exclusive or exhaustive treatment of the present subject matter. Further details about the present subject matter are found in the entire present disclosure, including the detailed description and the appended claims. The scope of the invention is defined by the appended claims and their legal equivalents.

BRIEF DESCRIPTION OF THE DRAWINGS

The accompanying drawings are included to provide a further understanding of the invention and are incorporated in and constitute a part of the present specification. The drawings illustrate embodiments of the invention and, together with the description, serve to explain the principals of the invention. The drawings illustrate the design and utility of embodiments, in which similar elements may be referred to by common reference numerals. These drawings are not necessarily drawn to scale. In order to better appreciate how the above-recited and other advantages and objects are obtained, a more particular description of the embodiments will be rendered, which are illustrated in the accompanying drawings. These drawings may depict only typical embodiments and are not therefore to be considered limiting of its scope. In the following, embodiments of the invention are described in more detail with reference to the appended drawings.

Fig. 1 schematically illustrates an exemplary efficiency map with measurement points.

Figs. 2 and 3 schematically illustrates some principles of obtaining a plurality of setpoints in accordance with embodiments of the invention.

Fig. 4 schematically illustrates some principles of obtaining a plurality of setpoints in accordance with embodiments of the invention.

Fig. 5 schematically illustrates some principles of obtaining a plurality of setpoints in accordance with embodiments of the invention.

Fig. 6 schematically illustrates a method in accordance with an embodiment of the invention.

Fig. 7 schematically illustrates a method in accordance with an embodiment of the invention.

Fig. 8 schematically illustrates a system in accordance with an embodiment of the invention.

DETAILED DESCRIPTION

One, more, or all the following definitions may be applied for interpreting terms applied to features of the embodiments disclosed herein and are meant only to define elements within the disclosure. No limitations on terms used within the claims are necessarily intended, or should necessarily be derived, thereby. Terms used within the appended claims may or should only be limited by their customary meaning within the applicable arts.

Throughout the present disclosure, ordinal numbers are generally understood as mere nominal numbers, unless expressed otherwise. For instance, the terms: "first", "second", "third", etc., are generally understood as arbitrary identifiers of the respective features of the invention unless expressed otherwise. Throughout the present disclosure, use of ordinal numbers for events and steps do not necessarily indicate any timing and/or prioritizing of the respective events or steps. Accordingly, one event, such as a first event, may occur before, during, or after another event, such as a second event, or the one event may occur at any combination of before, during, and after the other event - unless expressed otherwise. Similarly, the presence of a "second feature" does not necessarily necessitate the presence of a "first feature" of the same kind, and the presence of a "third feature" does not necessarily necessitate the presence of a "first feature" and a "second feature", etc.

Throughout the present disclosure the term "speed" generally refers to "rotational speed".

The method for mapping according to the invention may be a computer-implemented method. A computer-implemented method may imply that all steps of the method is carried out by a computer system. The method for mapping according to the invention may be executed, and/or may be configured to be executed, by means of a computer system. A computer system may for instance include any one or any combination of: a server, a client, and a cloud-computing service. The invention may be provided by means of any one or any combination of: a computer program, a computer-readable medium, and a computer program product. The invention may comprise any one or any combination of: a computer program, a computer-readable medium, and a computer program product, which may comprise means for carrying out the method for mapping according to the invention. The invention may comprise a computer program comprising instructions which, when executed by a computer system, causes the computer system to carry out the method for mapping according to the invention. The computer program product according to the invention may be embodied by means of a computer readable medium. The invention may comprise a computer-readable medium having stored thereon a computer program according to the invention. The invention may comprise a computer-readable medium comprising instructions which, when executed by a computer system, cause the computer system to carry out the method for mapping according to the invention. Any of the computer program, the computer-readable medium, and the computer program product according to the invention may be distributed, e.g., over a plurality of physical entities and/or computational entities. The invention may be realized by means of a distributed computing system, which may be denoted "a distributed computing environment", such as using or comprising a computer network. Within such distributed computing system, the method for mapping according to the invention may be carried out by one or more or all of a plurality of entities, such as any combination of: one or more client computers, one or more server computers, and one or more cloud computers. A data carrier signal carrying the computer program of the invention may be provided. According to the invention a computer program product may be provided, wherein the computer program product comprises instructions which, when being executed by a computer, cause the computer to carry out the method of the invention. The computer program may be configured for running on a general-purpose computer. The computer program may be configured for communication with a test system.

The first rotary system may comprise or may be a drive train, e.g., an electric drive train. The first rotary system may comprise or may be a component for a drive train, e.g., an electric component for a drive train. The first rotary system may comprise or may be a rotary actuator system, a rotary transmission system, or a rotary generator system. The first rotary system may be electric, such as comprising one or more electric parts for converting electrical energy to mechanical energy or vice versa. The first rotary system may comprise or may be an electric machine, e.g., an electric motor or an electric generator. The first rotary system may comprise or may be an internal combustion engine (ICE) and/or a turbine. The first rotary system may be referred to as the device under test, e.g., in context of test and/or measurement of the first rotary system.

The invention may apply to mapping of various operational characteristics. A choice of which operational characteristic to be mapped is usually a matter of what is of interest and usually depends on the type and choice of rotary system. The operational characteristic may be efficiency. In the context of the invention, efficiency may be understood as how efficient the first rotary system is at converting or transmitting energy from input to output of the first rotary system. The operational characteristic may be power losses. Power losses, usually represent the portion of input power that is not converted into useful output but instead is lost in various forms, such as heat, sound, or vibration. The operational characteristic may be sound level or sound pressure generated by the first rotary system. Such sound level or pressure may be referred to as noise. The operational characteristic may be thermal energy generated by the first rotary system. The operational characteristic may be durability, e.g., to be measured from wear and tear. The operational characteristic may be torque. The operational characteristic may be inductance or a component of inductance, which in particularly may be of interest in the context of mapping an electric rotary system.

The term "mapping" in the context of the invention generally refers to a process of obtaining or providing a set of data, referred to as "mapping data", comprising a representation of how the operational characteristic of the first rotary system varies as a function of the one or more operation parameters. Such mapping data may be suited for analysis or optimization purposes, e.g., for design, operation, and/or control of the first rotary system. Individual data points of the mapping data may be referred to as mapping data points.

The process of mapping may include generating a visual representation of the mapping data. However, the purpose of mapping is not necessarily confined to, nor does it necessarily include such visual representation. While visual maps may be beneficial for human interpretation, the underlying data may solely or additionally serve a broader function as referred to in the present disclosure, e.g., aiding in optimization of system performance, energy savings, and/or cost reduction. For instance, torque mapping of an electric motor might reveal optimal operating points that balance power consumption and output efficiency, which is vital for applications, e.g., in electric vehicles and automated machinery.

Usually, the operational characteristic depends on various parameters of the first rotary system. These parameters may collectively be referred to as "influencing parameters". The influencing parameters may be divided into two groups: the one or more operation parameters; and a plurality of reference parameters, wherein the plurality of reference parameters defines the reference condition. When mapping the operational characteristic, any influencing parameter not being an operation parameter is per definition a reference parameter. Similarly, an operation parameter cannot be a reference parameter. Similarly, a component of the setpoints cannot be a component of the corresponding reference condition and vice versa.

Depending on the operational characteristic and the first rotary system, the influencing parameters may comprise various physical properties. The influencing parameters may comprise input and/or output torque of the first rotary system. The influencing parameters may comprise input and/or output speed of the first rotary system. The influencing parameters may comprise temperature of the first rotary system. The influencing parameters may comprise temperature of the surroundings of the first rotary system. The influencing parameters may comprise heat dissipation coefficient of the first rotary system. The influencing parameters may comprise one or more energy supply or generation metrics, e.g., supply voltage or current (e.g., for an electric motor) or fuel octane level (e.g., for an ICE).

Practically, for rotary systems, an operational characteristic usually depends on various influencing parameters. For instance, the efficiency of an electric motor usually depends on several parameters including torque, speed, system temperature, battery voltage, switching frequency, etc. In many cases, e.g., for easy of graphic representation, two operation parameters are allowed to vary (like torque and speed) while the other parameters (the reference parameters) may be kept more or less constant or disregarded. A change in value of the reference parameters then influences the torque-speed-efficiency map. The user may want to vary three or more parameters (i.e., operation parameters) and keep the remaining parameters (i.e., reference parameters) more or less constant or disregarded. Ultimately, it may be a matter of how to utilize and/or illustrate the obtained mapping data.

The invention may apply to mapping of various operational characteristics as a function of various one or more operation parameters. A choice of which one or more operation parameters to be utilized for mapping the operational characteristic is usually a matter of interest and usually depends on the type of rotary system and the choice of operational characteristic. Often, it is of interest to choose those one or more operation parameters, which have a significant effect on the operational characteristic, and which can be controlled and/or designed for the first rotary system during normal use hereof. The operational characteristic along with the one or more operation parameters usually represents interdependent variables of the process of mapping.

The invention may comprise mapping the operational characteristic of the first rotary system as a function of two or more operation parameters, such as: two operation parameters, exactly two operation parameters, at least two operation parameters, or more than two operation parameters, such as three operation parameters or more.

Depending on the operational characteristic and the first rotary system, the one or more operation parameters may comprise various one or more physical properties. The one or more operation parameters may comprise input and/or output torque of the first rotary system. The one or more operation parameters may comprise input and/or output speed of the first rotary system. The one or more operation parameters may comprise temperature of the first rotary system. The one or more operation parameters may comprise temperature of the surroundings of the first rotary system. The one or more operation parameters may comprise heat dissipation coefficient of the first rotary system. The one or more operation parameters may comprise one or more energy supply or generation metrics, e.g., supply voltage or current (e.g., for an electric motor) or fuel octane level (e.g., for an ICE).

For illustration purposes of the mapping data, it may be desired to choose that the one or more operation parameters consists of just one or two operation parameters. However, mapping an operational characteristic as a function of three or more operation parameters may be of interest for obtaining the resulting mapping data. Furthermore, a graphical illustration of such mapping data based on three or more operation parameters is possible and is merely a matter of means of illustration. Furthermore, such mapping data based on three or more operation parameters can readily be utilized for illustration of the operational characteristic as a function of a selected one or two of the three or more operation parameters.

The operational characteristic cannot be an operation parameter for the same embodiment. However, what constitutes an operational characteristic in one embodiment can be an operation parameter in another embodiment, e.g., for torque as an operational characteristic or as an operation parameter, as described in the context of various embodiments.

According to embodiments, the one or more operation parameters are controlled by means of the plurality of setpoints. An operation parameter of a measurement generally refers to the corresponding measured value of the first rotary system when being controlled in accordance with a respective component of a setpoint, which component represents the intended or target value of the corresponding operation parameter, which is not necessarily identical to the actual or measured value hereof. However, in some cases, one or more respective components of a setpoint are utilized as the corresponding operation parameter for a respective mapping data point, e.g., without any measurement of the corresponding operation parameter.

Generally, when defining specific operation parameters, it may be implicit that any other influencing parameters may be attempted to be kept at constant levels.

For the purpose of mapping the operational characteristic the one or more operation parameters are usually defined within an operation range. Such operation range usually comprises one component for each of the one or more operation parameters. The operation range is usually defined to encompass the range of interest for the respective one or more operation parameters.

The method for mapping the operational characteristic may be defined as being carried out "under a first reference condition". The terminology "under a first reference condition" is understood such that the first reference condition exist for the first rotary system during the measurements leading to the provision of the mapping data points. Such existence may be irrespective of whether such reference condition is defined and/or measured and/or disregarded. Accordingly, the plurality of reference parameters may form part of or may define a respective reference condition, such as the first reference condition. One or more reference parameters of a respective reference condition may for instance be measured, registered, or estimated in connection with measurement of the respective rotary system for obtaining the respective mapping data points.

The first reference condition may be understood as a set of reference parameters that may impact the value of a measured operational characteristic but is kept constant (e.g., adequately constant, such as within an acceptable range) while mapping the operational characteristic as a function of the one or more of the operation parameters.

While the reference parameters may be intended to remain unchanged, variations may occur within a given reference condition. Such variations may be disregarded and/or may be noted as part of the experimental conditions. There may be practical difficulty in keeping one or more reference parameters constant. However, for some cases, one or more reference parameters are not intended to be constant. In any event, reference parameters usually form the backdrop of the measurements. Usually, it is attempted to keep reference parameters at constant levels/values. Reference parameters are usually not the primary focus of the respective measurements. Reference parameters usually serve as a reference point or baseline condition against which the effects of varied operation parameters on the operational characteristic are measured. In practice, it may often be tried to keep reference parameters constant, but this will not always be practically achievable.

The term "seed data" in the context of the invention generally refers to data representing an assumption and/or estimation and/or approximation of the operational characteristic of the first rotary system as a function of the one or more operation parameters. The seed data, or a part thereof, may be readily available, e.g., via one or more previous measurements of the first rotary system or another rotary system. Alternatively, or additionally, the seed data, or part thereof, may be obtained relatively fast and/or relatively easy, e.g., from a simulation utilizing a software model of the first rotary system and/or from dynamic measurements of the first rotary system or of another rotary system. Accordingly, the seed data may comprise or consist of data obtained via dynamic measurements of the first rotary system and/or of another rotary system. Dynamic measurements may for instance be obtained by continuously varying (e.g., continuously decreasing or increasing, e.g., ramping up) one or more of the one or more operation parameters while measuring the input and/or output of the respective rotary system. In accordance with embodiments where the operational characteristic is efficiency, and each setpoint comprises, e.g., a torque component and a rotational speed component, the seed data may comprise or consist of data obtained by means of dynamic measurements of the first rotary system. In such case, a speed-component value may for instance be driven sequentially, while, for each speed-value, the torque may be ramped up continuously while the input and/or output of the system is registered, e.g. by measuring the input and/or output.

It is usually preferable that the seed data represents a valid resemblance of the operational characteristic as a function of one or more operation parameters for the first rotary system. Good quality of the seed data is understood such that the resemblance is good. Generally, the better the quality of the seed data, the better the prediction model will work in the process of providing useful setpoints for obtaining a useful plurality of mapping data points.

The prediction model may be broadly understood as a systematic approach to generate predictions about future behaviours. This may be achieved by constructing a model that analyses the relationships between different variables within a dataset. Specifically, the model may for instance use a subset of data points, referred to as model data, selected from a larger set of data points, referred to as seed data, where the number of data points of the model data usually is significantly smaller than the number of data points of the seed data, e.g., smaller than 20% hereof. The model may for instance leverage various methods, such as piecewise linear approximations or the use of orthogonal polynomials like Chebyshev polynomials, to make these predictions. An objective of such a model is often to optimize certain parameters, such as minimizing the maximum a priori error. An a priori error usually represents an estimated deviation of the model's predictions from the actual outcomes before the actual outcomes are observed. This optimization is usually for enhancing the model's predictive accuracy and reliability.

A prediction model may for instance generate setpoints on a rectangular grid or at arbitrary locations.

The a priori error setting of the prediction model may be or may comprise a first value. The first value may apply for the entire operation range of the one or more operation parameters. Additionally, the a priori error setting may comprise a second value. The second value may apply for the entire operation range of the one or more operation parameters or for a first subset hereof. The second value may be of a smaller magnitude than the first value. The first value and/or the second value may be or may be related to: an average error value, a median error value, a maximum error value, or any combination hereof. The a priori error setting may be or may comprise an a priori a maximum error value, e.g., for the entire operation range.

The a priori error setting may be or may comprise a first condition. The first condition may be to minimize the a priori error, such as the maximum, the median, or the average a priori error. Such first condition to minimize the a priori error may be in dependence of a second condition, such as a definition or limitation regarding the number of setpoints constituting the plurality of setpoints. For instance, the a priori error setting may be or may comprise a first condition to minimize the maximum value of the a priori error over the entire operation range given a second condition of a maximum or specific number of setpoints of the plurality of setpoints.

The a priori error setting, such as a value hereof, may be specified. The a priori error setting, such as a value hereof, may be set by a user and/or by a system carrying out the method and/or by the implementation of the method.

Generally, an a priori error is related to a metric of difference between estimated values of the operational characteristic as provided utilizing the prediction model and the expected measured values of the operational characteristic. The expectation being represented by the seed data. Accordingly, an a priori error generally refers to the error estimate made before the mapping, the estimate being based on for instance theoretical or prior knowledge - such as synthetic data or data obtained from measurements under different settings, different conditions, different systems, etc. The metric of difference may for instance be quantified through methods such as maximum error, mean squared error, root mean squared error, or mean absolute error, between model values provided by the prediction model and expected values being represented by the seed data. According to embodiments, the seed data represents the expected outcome and is utilized to train and test the prediction model.

It is emphasized that the concept of an a priori error applies even if one or more mapping data points are utilized for obtaining a setpoint if the error of the respective setpoint is evaluated based on data/information including estimation data and not solely evaluated based on a real measurement value for that setpoint.

The term "setpoint" in the context of the invention generally refers to control value(s) for the one or more operation parameters. The setpoints may be obtained, e.g., by being generated or selected from the seed data. Generally, each setpoint is defined by a component for each one or more operation parameters. Generally, each setpoint is provided within the first operation range.

According to embodiments, the plurality of setpoints comprises at least four setpoints, such as at least five setpoints. According to embodiments, the plurality of setpoints comprises at least six setpoints, such as at least seven setpoints.

The term "mapping data point" in the context of the invention generally refers to a data point obtained, e.g., received and/or derived and/or measured, in the context of one or more measurements of the first rotary system in response to control of the first rotary system in accordance with a respective setpoint and optionally under a/the first reference condition. The one or more measurements of the first rotary system may comprise various input and/or output measurements. Generally, at least one output or input measurement is usually needed. For instance, for efficiency mapping of an electric motor, at least one measurement reflecting the input power provided for the motor to deliver a given combination of speed and torque is usually needed for each mapping data point. For instance, if the supply voltage of the electric motor is assumed constant and known, it may be sufficient to merely measure the current supply. The output power may be provided via one or more measurements and/or via assumptions based on settings of a system controlling the measurement, e.g., utilizing the component(s) of each respective setpoint as respective component(s) (i.e., operation data component(s)) of each mapping data point in combination with each respective acquisition data component in order to arrive at a respective mapping data point.

Obtaining a data point utilizing one or more measurements generally implies that at least one component, usually at least the acquisition data component, of the data point is obtained utilizing one or more measurements.

According to embodiments, the obtained number of mapping data points is equal to the number of setpoints utilized for control and measurements of the first rotary system.

A step of generating interpolation data utilizing the plurality of mapping data points normally implies that the mapping data is complemented by interpolation data. Accordingly, the mapping data will comprise the mapping data points existing before interpolation in addition to the interpolation data provided by the interpolation. Interpolation data may comprise a plurality of interpolation data points.

The step of obtaining the plurality of setpoints may comprise obtaining the second setpoint utilizing the first mapping data point. Furthermore, the step of obtaining the plurality of setpoints may comprise obtaining the optional third setpoint utilizing the first mapping data point and the second mapping data point. Accordingly, the first mapping data point may be obtained before deriving the second mapping data point. Furthermore, the optional third mapping data point may be obtained after deriving the second mapping data point, which may be obtained after deriving the first mapping data point.

According to embodiments, a setpoint of the plurality of setpoints is obtained utilizing one or more previously obtained mapping data points. Accordingly, a subset of the plurality of setpoints, may be obtained utilizing the prediction model, the seed data, the a priori error setting, and one or more previously obtained mapping data points.

According to embodiments, one or more mapping data points are utilized for generating not just one new setpoint, but for generating a new set, or a subset, of setpoints, wherein the setpoint(s), which were utilized for obtaining the utilized one or more mapping data points, may be pre-fixed for a subsequent utilization of the prediction model. For instance, if the step of obtaining a plurality of setpoints is under a condition of selecting for instance exactly five setpoints, then, initially, five setpoints, e.g., denoted candidate setpoints, may be obtained based on the prediction model, the seed data, and the a priori error setting, e.g., of minimizing the maximum a priori error. Subsequently, and upon obtaining a first mapping data point in accordance with a first setpoint of the five candidate setpoints, four new candidate setpoints may be obtained based on the prediction model, the seed data, the a priori error setting, and the previously obtained mapping data point(s), i.e., the first mapping data point. Subsequently, and upon obtaining a second mapping data point in accordance with a first setpoint of the four candidate setpoints, three new candidate setpoints may be obtained based on the prediction model, the seed data, the a priori error setting, and the previously obtained mapping data point(s), i.e., the first mapping data point, and the second mapping data point. Subsequently, and upon obtaining a third mapping data point in accordance with a first setpoint of the three candidate setpoints, two new candidate setpoints may be obtained based on the prediction model, the seed data, the a priori error setting, and the previously obtained mapping data point(s), i.e., the first mapping data point, the second mapping data point, and the third mapping data point. Subsequently, and upon obtaining a fourth mapping data point in accordance with a first setpoint of the two candidate setpoints, one new setpoint may be obtained based on the prediction model, the seed data, the a priori error setting, and the previously obtained mapping data point(s), i.e., the first mapping data point, the second mapping data point, the third mapping data point, and the fourth mapping data point. Accordingly, the step of obtaining the plurality of setpoints may comprise obtaining the respective first setpoint of each of the provided set of candidate setpoints in addition to the last provided setpoint, i.e., five setpoints in total.

An advantage of utilizing one or more previously obtained mapping data points for obtaining one or more subsequent setpoints may be an improvement in obtaining setpoint(s) that in turn may improve the quality of the mapping data.

The seed data comprises a plurality of seed data points.

The seed data may comprise or may consist of synthetic data. Such synthetic data may be derived utilizing a software model of the first rotary system, i.e., a model being at least adequate for the first rotary system. Accordingly, the synthetic data may be derived by means of a simulation of the first rotary system. A software model of the first rotary system may refer to a software model of a system being different from the first rotary system, but still useful for the purpose of providing useful seed data. One or more advantages of obtaining seed data comprising or consisting of synthetic data may include that such synthetic data may be obtained relatively fast, e.g., fast compared to seed data obtained utilizing one or more measurements. Another advantage may be that, depending on the quality of the model and the generation of synthetic data, such data may represent a fair approximation of the actual mapping data of the first rotary system.

The seed data may comprise data obtained utilizing one or more measurements of the first rotary system under a second reference condition being different from a/the first reference condition, e.g., within and/or outside the first operation range, wherein each mapping data point being obtained utilizing one or more measurements of the first rotary system under the first reference condition.

The seed data may comprise data obtained utilizing one or more measurements of the first rotary system within and/or outside the first operation range.

The second reference condition may comprise a different value or setting of at least one component of the first reference condition. The second reference condition may for instance comprise a different system temperature, a different supply voltage of the system, or be based on dynamic measurements or different dynamic measurements.

Advantages associated with use of measurements under the second reference condition include that such may be readily available from a previous measurement and/or may be obtained relatively fast, e.g., for dynamic measurements.

In general, a similar correlation between the operational characteristic and the one or more operation parameters for the first and second reference conditions will lead to seed data with better quality.

The seed data may comprise data obtained utilizing one or more measurements of a second rotary system being different from the first rotary system. Such data obtained from the second rotary system may be obtained utilizing one or more measurements within and/or outside the first operation range. Additionally, or alternatively, such data obtained from the second rotary system may be obtained utilizing one or more measurements under the first, the second, or a third reference condition, wherein the third reference condition is different from the first reference condition.

Advantages associated with use of measurements of a second rotary system is that such data may be readily available from previous measurements.

In general, a similar correlation between the operational characteristic and the one or more operation parameters for the first and second rotary systems will lead to seed data with better quality.

Generally, it is of interest that the seed data comprises more data points than the number of setpoints of the plurality of setpoints, e.g., at least twice the number or at least four times the number. An increase in the number of data points of the seed data generally improves the accuracy of the prediction model. On the other hand, an increase in data points of the seed data also generally results in an increase in computational costs for obtaining the plurality of setpoints. Accordingly, it may be desired to strike a balance between accuracy of the prediction model and computing costs resulting from utilization of data points of the seed data.

When utilizing synthetic data derived utilizing a software model of the first rotary system, the desired number of data points of the seed data can be generated directly from the software model. In case of utilizing previously obtained data via measurements, the obtained dataset may be interpolated such that a desired number of data points is provided within the seed data. The seed data may comprise a combination of synthetic data and data obtained utilizing one or more measurements of the first rotary system and/or the second rotary system.

The method may comprise obtaining the prediction model from a plurality of candidate prediction models. The plurality of candidate prediction models may comprise a spectral model, where a collection of orthogonal polynomials may be utilized, e.g., Chebyshev polynomials. The plurality of candidate prediction models may comprise a piecewise linear model. The plurality of candidate prediction models may comprise a local search model.

The obtaining of the prediction model from the plurality of candidate prediction models may be based on a first selection by the user and/or by the system/method of the invention. The first selection may be a selection of one specific prediction model from the plurality of candidate prediction models or a selection of a sub-group hereof.

For instance, based on user experience that a certain one or more methods works best for certain conditions, the user may simply select a particular one or a sub-group of the candidate prediction models.

The method may comprise seed data analysis, e.g., comprising frequency and/or amplitude analysis. The method may comprise presentation of a result of the seed data analysis to the user. Such result may aid the used in selecting a prediction model. Alternatively, or additionally to presentation of a result of the seed data analysis to the user, the method may comprise utilizing the seed data analysis in a selection process to select a particular one or a sub-group of the candidate prediction models.

Various prediction models may perform differently. For instance, given the same setting regarding a priori maximum error, one prediction model may result in more needed setpoints than another prediction model to achieve this a priori error condition. Furthermore, various prediction models may perform differently in terms of computation time to obtain the plurality of setpoints. The performance of a prediction model may depend on the type of characteristic, seed data quality, etc.

The step of obtaining the prediction model from a plurality of candidate prediction models may be in response to a performance analysis and/or in response to the seed data analysis. The performance analysis may be carried out in response to a performance setting. The performance setting includes a setting regarding one or more of: an a priori error, number of setpoints to be obtained, computational time/extent/effort. The performance setting may be pre-set, e.g., by the system executing the method, and/or may be set or adjusted by a user. The performance setting may for instance comprise a maximum number of setpoints, a maximum a priori error, and a maximum computational effort. Accordingly, the method may for instance carry out a performance analysis of various candidate prediction models, e.g., from the plurality of candidate prediction models or a sub-group hereof, and/or optionally various settings of such models, and/or based on an seed data analysis. Based on the performance analysis, the system/method may obtain/select a prediction model to be utilized for obtaining a plurality of setpoints or may present a suggestion to the user. The performance analysis may result in the step of obtaining the plurality of setpoint.

The method may be configured for obtaining a user selection of the prediction model to utilize for obtaining the plurality of setpoints. The user may select that a rectangular distribution of setpoints is obtained. The user may choose for a minimum number of setpoints or a minimum runtime to find the setpoints.

The method may comprise selecting the prediction model utilized for obtaining a plurality of setpoints, wherein the selecting is in response to the seed data analysis. For example, if the seed data contains high frequencies with a high amplitude, it may be decided to utilize a prediction model based on Chebyshev polynomials rather than one based on piecewise linear interpolation.

The step of obtaining the plurality of setpoints may comprise generating one or more weights for the prediction model, e.g., one or more weights for a collection of orthogonal polynomials.

The step of obtaining the plurality of setpoints may comprise optimizing the prediction model, e.g., by minimizing the number of setpoints within the plurality of setpoints given a constraint defined by the a priori error setting. The constraint may be a maximum value of the a priori error. Accordingly, the a priori error setting may be defined as a maximum a priori error value.

The step of generating interpolation data may comprise utilizing the prediction model or one or more aspects of the prediction model. For instance, the same one or more weights for the prediction model, which may be generated as a part of the step of obtaining the plurality of setpoints, may be utilized within the step of generating interpolation data. Alternatively, or additionally, the step of generating interpolation data may comprise utilizing a first fitting model, which may be more computational simple than utilizing the prediction model. The first fitting model may for instance comprise linear interpolation or spline interpolation, e.g., cubic spline interpolation. In any event, the plurality of mapping data points may be utilized for providing the interpolation data to be included in the mapping data.

The management method may comprise execution of the method according to the invention for mapping an operational characteristic. The first management step may comprise control and measurement of the first rotary system in accordance with the first setpoint. The second management step may comprise control and measurement of the first rotary system in accordance with the second setpoint. The third management step may comprise control and measurement of the first rotary system in accordance with the third setpoint. The management method may comprise accommodating and/or mounting of the first rotary system to a management system configured to carry out the management method.

The management system may be configured for accommodating the first rotary system and/or for having the first rotary system being mounted to the management system. The management system may be or comprise a control and data acquisition system. The management system may comprise a test system and an automation system. The management system may be configured for acquiring the plurality of mapping data points.

The invention may be implemented for mapping various operational characteristics of various rotary systems as a function of various one or more operation parameters.

According to embodiments the first rotary system is or comprises an electric machine, such as an electric motor, the operational characteristic is efficiency, each setpoint comprises a torque component and a rotational speed component, and each setpoint may furthermore comprise a component of supply voltage of the electric machine.

According to embodiments the first rotary system is or comprises an electric machine, such as an electric motor, the operational characteristic is power losses, each setpoint comprises a torque component and a rotational speed component, and each setpoint may furthermore comprise a component of supply voltage of the electric machine.

According to embodiments the first rotary system is or comprises an internal combustion engine, the operational characteristic is efficiency, and each setpoint comprises a torque component and a rotational speed component.

According to embodiments the first rotary system is or comprises an internal combustion engine, the operational characteristic is power losses, and each setpoint comprises a torque component and a rotational speed component.

According to embodiments the first rotary system is or comprises an electric motor, e.g., a permanent-magnet synchronous motor, the operational characteristic is direct axis inductance ($L_d$), each setpoint comprises a direct axis current ($I_d$) component and a quadrature axis current ($I_q$) component, and each setpoint may furthermore comprise a component of supply voltage of the electric motor.

According to embodiments the first rotary system is or comprises an electric motor, e.g., a permanent-magnet synchronous motor, the operational characteristic is quadrature axis inductance ($L_q$), each setpoint comprises a direct axis current ($I_d$) component and a quadrature axis current ($I_q$) component, and each setpoint may furthermore comprise a component of supply voltage of the electric motor.

According to embodiments the first rotary system is or comprises an electric motor, e.g., a permanent-magnet synchronous motor, the operational characteristic is torque, each setpoint comprises a direct axis current ($I_d$) component and a quadrature axis current ($I_q$) component, and each setpoint may furthermore comprise a component of supply voltage of the electric motor.

According to embodiments the first rotary system is a diesel generator, the operational characteristic is output power, and each setpoint consist of a biodiesel-to-petrodiesel ratio of supplied fuel.

According to embodiments the first rotary system comprises an electric motor, the operational characteristic is noise generated by the first rotary system, and each setpoint comprises a rotational speed component, a torque component, a supply voltage component, and system temperature component.

According to embodiments the first rotary system comprises an electric motor, the operational characteristic is efficiency, and each setpoint comprises a rotational speed component, a torque component, a supply voltage component, and system temperature component.

According to embodiments (referred to as a "first variation") of the step of obtaining the plurality of setpoints the prediction model comprises a piecewise linear method, where the one or more operation parameters consists of a single operation parameter. However, the principles of the first variation apply for embodiments for mapping the operational characteristic as a function of more than one operation parameter, such as for two or more operation parameters.

Figs. 2 and 3 are referred to for graphical illustrations of some of the principles of the first variation, both figures illustrating approximate values of the operational characteristic as a function of the operation parameter, i.e., illustrating A(O). The solid curved line, which is identical for Figs. 2 and 3, represents A(O) for a first software model of the first rotary system. The 19 respective junctions, also identical for Figs. 2 and 3, between the 19 evenly spaced vertical lines and the solid curved line, represent 19 respective data points of the seed data, i.e., synthetic data derived utilizing the first software model of the first rotary system. These 19 data points, referred to as $(O_1, A(O_1))$ to $(O_{19}, A(O_{19}))$, respectively, are evenly spaced along the x-axis, i.e., for the respective values of the operation parameters $O_1$-$O_{19}$. The 19 data points, i.e., the seed data, is utilized for obtaining the plurality of setpoints by optimization / evaluation of the prediction model.

For the first variation, the seed data consists of 19 data points, individually referred to as $(O_x, A(O_x))$. The choice of 19 data points is mainly for illustration purpose. For one or more alternative embodiments, any desired number of setpoints may be chosen. Based on the first software model of the first rotary system, the desired number and/or spacing of data points for the seed data can be obtained relatively easily. If the seed data comprises data based on measurements, i.e., measurements being relevant for the mapping, and if such data comprises fewer data points than desired or data points spaced too far, interpolation hereof may be carried out to obtain a desired number and/or spacing of the data points of the seed data. The number of data points of the seed data is proportional to the computational effort needed for evaluating/optimizing the prediction model. Accordingly, in order to reduce the needed computational effort, the number of data points can be decreased accordingly. However, the number, and to some degree the spacing, of data points of the seed data is also proportional to the accuracy of an evaluation of the prediction model at least up to a certain limit. Accordingly, a balance between evaluation quality and processing effort is desired.

Further, referring to Fig. 2, four data points of the seed data are initially selected for an initial exemplary evaluation of the prediction model in accordance with the first variation. The selected data points for the prediction model constitute an initial set of model data points for the initial evaluation. Generally, the set of selected data points for a prediction model is referred to as model data. The initial model data, i.e., the four model data points initially selected from the seed data, are illustrated by means of the four solid dots on Fig. 2, i.e., at the values of $(O_1, A(O_1))$, $(O_7, A(O_7))$, $(O_{13}, A(O_{13}))$, and $(O_{19}, A(O_{19}))$. The values are evenly spaced along the "x-axis" (the first axis, the horizontal axis) in terms of the first component, $O_x$. The dashed line on Fig. 2 illustrates a continuous piecewise linear interpolation utilizing the four data points of the initial model data as boundaries resulting in a continuous piecewise linear function consisting of three linear sections.

According to the invention, the step of obtaining the plurality of setpoints generally comprises optimizing the utilized prediction model by comparison with the seed data, wherein the prediction model usually is based on a sub-set of the seed data. The optimization of the prediction model is based on the a priori error setting and optionally a limitation relating to the number of setpoints. For the first variation, the a priori error setting consists of minimizing the maximum a priori error value. For the first variation, optimizing the prediction model consists of minimizing the maximum a priori error value given a fixed number of setpoints, i.e., four setpoints for the illustrated implementation of Figs. 2 and 3. The principles of the first variation apply for alternative embodiments as well as for alternative a priori error settings - e.g., with or without a limitation relating to the number of setpoints.

Returning to Fig. 2, respective error values of the prediction model in relation to each data point of the seed data is visualized by the absolute distance between the prediction model and the respective seed data point along the "y-axis", i.e., the absolute vertical distance between the dashed line and the solid curved line. This error value may be referred to as the prediction error. The prediction error value is zero for each data point of the seed data being included in the model data. The maximum prediction error value, $E^*$, is the maximum absolute distance between the dashed line and the solid line for any data point of the seed data. For the situation illustrated in Fig. 2, the maximum prediction error value exists for the operation parameter value $O_{16}$.

Since the seed data constitutes an initial dataset for the operational characteristic as a function of the one or more operation parameters for the first rotary system, the maximum prediction error value, $E^*$, corresponds to the maximum a priori error value for the respective model and respective selection of model data.

Fig. 3 is similar to Fig. 2. The only difference being a different set of four model data points from the same seed data, and accordingly, a different piecewise linear interpolation based on the different model data. The model data illustrated in Fig. 3 consists of the four data points $(O_1, A(O_1))$, $(O_8, A(O_8))$, $(O_{16}, A(O_{16}))$, and $(O_{19}, A(O_{19}))$. Consequently, an evaluation of the prediction model using the seed data will result in a different set of prediction error values between the seed data and the respective two prediction models for the two situations. As can be visually observed from comparing Figs. 2 and 3, the maximum prediction error value, $E^*$, is significantly smaller for the situation of Fig. 3 even though the same number of model data points, or boundaries, are utilized in the two situations. Both piecewise linear approximations are formed by three linear segments, but due to different boundaries between the segments the piecewise linear approximation in Fig. 3 leads to a smaller maximum prediction error value $E^*$ and hence to a better approximation/optimization based on the optimization condition of minimizing the maximum a priori error value given four setpoints. The number and selection of setpoints corresponds to the number and selection of model data points, i.e., the respective first components hereof, $O_x$. Accordingly, for the first variation as illustrated by means of Figs. 2 and 3, the setpoints of $O_1$, $O_8$, $O_{16}$, and $O_{19}$, are provided as the plurality of setpoints being obtained.

Generally, a function can be well approximated by a piecewise linear function consisting of several linear segments. Using a larger number of segments generally leads to a better approximation/optimization. Furthermore, given a fixed number of segments, changing the boundaries between segments may lead to a better or worse approximation. Accordingly, given a fixed number of linear segments in a piecewise linear approximation function, the maximum prediction error depends on the location of the boundaries.

Generally, for a piecewise linear model, if the boundaries are collected in a vector $\vec{x} = (x_1 \, x_2 \ldots x_n)$ where $n$ is the number of boundaries, and if the model is to be optimized by minimizing the maximum prediction error, the problem to be solved may be finding the minimum of the function $e(\vec{x})$ where $e(\cdot)$ is the maximum prediction error given the boundaries $\vec{x}$ which is a standard optimization problem for which various solutions are available.

If the model is to be optimized by minimizing the number of setpoints (i.e., minimizing the number of boundaries) given a desired maximum a priori error value, the problem to be solved may be finding the minimum of the function $e(\vec{x})$ for the lowest number of $n$, wherein the minimum is lower than the desired maximum a priori error value. Accordingly, given an initial number of boundary points $n$ the resulting lowest possible maximum prediction error may for instance be too large. By increasing n and resolving the optimization problem the lowest possible maximum prediction error can be decreased until it is smaller than the desired value. Similar, if the lowest maximum prediction error is smaller than the desired setting, $n$ is to be decreased.

According to embodiments of the invention, e.g., utilizing the first variation, the method may comprise the following steps considering A as a function of O, where the boundaries $x_i$ are setpoints:

- Obtain seed data comprising a first approximation A of the operational characteristic of the first rotary system as a function of one or more operation parameters.

- Choose n data points from the seed data, where n may be at least 3, as an initial selection of mapping data.

- Optimize a first prediction model G utilizing piecewise linear approximation by minimizing the maximum prediction error based on the first prediction model by modifying the selection of n data points from the seed data utilized as model data.

- Continue increasing / decreasing n and modifying the selection of model data points from the seed data until the prediction error $E^*$ is smaller than a target maximum a priori error value for the lowest possible number of $n$

- Select the plurality of $n$ setpoints P based on the set of model data fulfilling the condition of the preceding bullet.
- Obtain a plurality of $n$ mapping data points based on the plurality of $n$ setpoints P.
- Generate interpolation data utilizing the plurality of $n$ mapping data points, e.g., by utilizing the first prediction model G as a piecewise linear function utilizing the plurality of $n$ mapping data points.

Piecewise linear interpolation is based on 1st order interpolation functions using points directly neighbouring the setpoint value for which a mapping data point value must be obtained. It is possible to extend the method of the invention by utilizing higher order interpolation functions.

According to embodiments (referred to as a "second variation") of the step of obtaining the plurality of setpoints the prediction model comprises an iterative piecewise linear method, where the one or more operation parameters consists of a single operation parameter. The principles of the second variation apply for embodiments for mapping the operational characteristic as a function of more than one operation parameter, such as for two or more operation parameters.

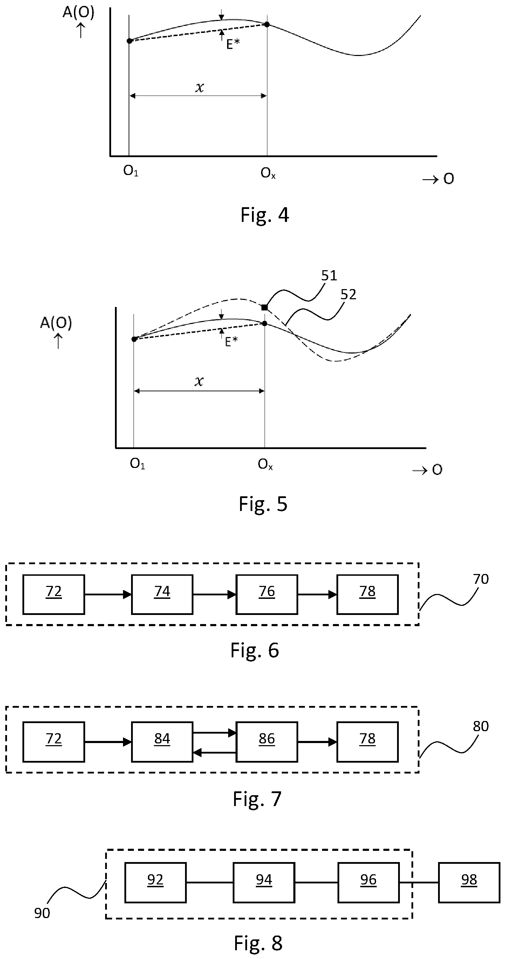

Fig. 4 is referred to for a graphical illustration of some of the principles of the second variation, illustrating approximate values of the operational characteristic as a function of the operation parameter, i.e., illustrating A(O). The solid curved line represents A(O) for a first software model of the first rotary system. Seed data consisting of synthetic data derived utilizing the first software model of the first rotary system may be obtained. A data point of the seed data may be referred to as $(O_x, A(O_x))$. The seed data is utilized for obtaining the plurality of setpoints by optimization / evaluation of the prediction model.

Similarly to some implementations of the first variation, a goal of implementations of the second variation is to find boundary points between linear segments such that the maximum prediction error E* is smaller than a desired value for the a priori maximum error.

For the second variation the boundaries are obtained one by one.

For a value $O_x$, the value $A(O_x)$ may be obtained efficiently from the first software model.

A first boundary point $(O_1, A(O_1))$ is indicated in Fig. 4 by the left circular dot. The goal is to find the distance $x$ to the next boundary, indicated in Fig. 4 by the right circular dot, such that the maximum prediction error E* is equal to (and/or does not exceed) a desired a priori maximum error E. Clearly, when $x$ is chosen very small the prediction error E* will be smaller than E and when $x$ is chosen very large, the maximum prediction error E* will be larger than E. Given a value $x$, the first boundary point and the approximation A(O), it is possible to determine the maximum prediction error E*$(x)$ and therefore to define a function $e(x)=E^*(x)-E$. The best value of $x$ is obtained for E*$(x)$-E=0 so $x$ can be obtained by finding the zero of the function $e(x)$. In the art, many methods are known to find the zeros of a function, such as Newton-Raphson's method or the secant method.

According to embodiments of the invention, e.g., utilizing the second variation, the method may comprise the following steps considering A as a function of O, where the boundaries form the setpoints:

- Define an error function $e(O)= E^*-E$.
- Obtain a plurality of n setpoints by utilizing a zero-finding method to obtain each setpoint $O_y$ such that $e(O_y) = 0$, such that desired operation range is approximated by the setpoints.
- Obtain a plurality of n mapping data points, each mapping data point being in accordance with each respective setpoint $O_y$.
- Generate interpolation data utilizing the mapping data points.

According to embodiments (referred to as a "third variation") of the step of obtaining the plurality of setpoints the prediction model comprises utilization of Chebyshev polynomials.

A function on a bounded interval may be well approximated as a weighted sum of Chebyshev polynomials of the first kind $T_i(x)$. If a function $g(x)$ represents seed data, e.g., by means of a software model of the first rotary system, an approximation of the function $g(x)$ using $N$ Chebyshev polynomials may be given as

$$g(x) \approx \sum_{k=0}^{N-1} c_k T_k(x) - \frac{1}{2} c_0$$

where the values $c_k$ are the weights. If the function $g(x)$ is evaluated in $N$ points $x_i$, the weights can be determined as

$$c_k = \frac{2}{N} \sum_{j=1}^{K} g(x_j) T_k(x_j)$$

.

If more Chebyshev polynomials and hence more weights are used, the error in the approximation of $g(x)$ will decrease if $g(x)$ is a smooth function, which it may be assumed to be. Furthermore, cutting off the sum of weighted polynomials after $T_m(x)$ will result in an error very close to the value $c_{m+1}$. Such may be assuming that the series converges uniformly and rapidly with no high-frequency components or discontinuities, which usually is assumed to be the case for $g(x)$ which represents approximate values of an operational characteristic of the first rotary system as a function of one or more operation parameters.

According to embodiments of the invention, e.g., utilizing the third variation, the method may comprise the following steps, considering that A is a function of O, where A represents approximate values of the operational characteristic and O represents the one or more operation parameters:

- Obtain the seed data, A(O).

- Ensure that the seed data A(O) has a relatively large number of data points, such as more than 50, e.g., by obtaining needed data points from a software model of the first rotary system or by interpolating from existing data points of the seed data.
- Determine the weights $c_k$ utilizing A(O).
- Determine the index $m$ fulfilling an optimization condition, e.g., where the value of $c_k$ is smaller than an a priori maximum error E and utilize this for obtaining the plurality of $m$ setpoints P
- Obtain a plurality of $m$ data points based on a plurality of $m$ setpoints P.
- Generate interpolation data using an updated prediction model, the updated prediction model being provided by determining $m$ weights $c_k$ using the plurality of m data points and utilizing a weighted sum of the Chebyshev polynomials $T_0$ through $T_{m-1}$ and the weights $c_0$ through $c_{m-1}$.

Compared to some other spectral methods, Chebyshev polynomials significantly reduces the Gibbs phenomenon at the extremes of the domain. Accordingly, Chebyshev polynomials may be preferred for the approximation of functions on a limited domain compared to some other spectral methods.

Utilization of one or more previously obtained mapping data points for obtaining one or more subsequent setpoints, e.g., including obtaining a set of candidate setpoints, may be carried out in various ways. A variation hereof, which variation may be implemented in embodiments of the invention, is illustrated by means of Fig. 5.

Fig. 5 schematically illustrates the same as in Fig. 4. Additionally, a mapping data point 51 obtained in accordance with the setpoint $O_x$ is illustrated by means of the solid square 51. Based on the mapping data point 51, the software model of the rotary system is updated or fitted. Such updated A(O) for a first software model of the first rotary system is illustrated by the rough dashed curved line 52. Accordingly, starting from the point 51, the iterative piecewise linear method may be carried out to obtain a second setpoint. Subsequently, a second mapping data point that is obtained in accordance with the second setpoint, may be utilized for a further update or fitting of the software model.

If the seed data comprises data from previous measurements obtained under different settings, e.g., for a different rotary system and/or for a different reference condition, such data may be fitted in accordance with obtained one or more mapping data points. According to embodiments utilizing Chebyshev polynomials for the prediction model, the function A(O) may for instance be amplified such that the resulting A(O) comes closer to or intersects the mapping data point.

Fig. 6 schematically illustrates a method 70 for mapping in accordance with a first embodiment of the invention. The method 70 is a computer-implemented method for mapping an operational characteristic of a first rotary system as a function of one or more operation parameters. The method 70 comprises: obtaining 72 seed data; obtaining 74 a plurality of setpoints; obtaining 76 a plurality of mapping data points; and generating 78 interpolation data utilizing the plurality of mapping data points.

The arrows from one box to another box represents that an output or result of a respective step is utilized or needed for carrying out another step. Accordingly, the seed data obtained by step 72 is utilized by step 74. The plurality of setpoints obtained by step 74 forms basis for obtaining the plurality of mapping data points of step 76. The plurality of mapping data points obtained by step 76 are utilized by step 78.

The seed data constitutes an initial dataset for the operational characteristic as a function of the one or more operation parameters for the first rotary system.

The plurality of setpoints comprises a first setpoint, a second setpoint, and a third setpoint. Each setpoint comprises a component for each of the one or more operation parameters. The plurality of setpoints is obtained 74 utilizing a prediction model, the seed data, and an a priori error setting.

The plurality of mapping data points comprises a first mapping data point, a second mapping data point, and a third mapping data point. Each mapping data point comprises an acquisition data component acquired utilizing one or more measurements of the first rotary system in response to control of the one or more operation parameters of the first rotary system in accordance with a respective setpoint, such that the first mapping data point comprises an acquisition data component acquired in accordance with the first setpoint, the second mapping data point comprises an acquisition data component acquired in accordance with the second setpoint, and the third mapping data point comprises an acquisition data component acquired in accordance with the third setpoint.

Fig. 7 schematically illustrates a method 80 in accordance with a second embodiment of the invention. The method 80 is similar to the method 70 of Fig. 6. The method 80 differs from the method 70 by having the steps: obtaining 84 a plurality of setpoints; and obtaining 86 a plurality of mapping data points instead of the steps: obtaining 74 a plurality of setpoints; and obtaining 76 a plurality of mapping data points, respectively.

The steps 84 and 86 differs from the steps 74 and 76, one of the differences being the dependency, as indicated by the arrows between the boxes 84 and 86 of Fig. 7. The step 84 of obtaining the plurality of setpoints comprises: obtaining the second setpoint utilizing the first mapping data point (which is obtained as part of step 86); and obtaining the third setpoint utilizing the first mapping data point and the second mapping data point (which is obtained as part of step 86).

Fig. 8 schematically illustrates an embodiment of a management system 90 in accordance with the invention. The management system 90 comprises: a mapping system 92; an automation system 94, and a test system 96. The mapping system 92 provides a plurality of setpoints to the automation system 94. The automation system 94 controls the test system 96 based on the plurality of setpoints. The test system 96 acquires one or more measurements from a first rotary system 98 based on control hereof in accordance with each setpoint of the plurality of setpoints. The first rotary system 98 is connected to the test system allowing control and measurement of the first rotary system 98 by means of the test system 96. As the test system 96 acquires measurement data from the first rotary system 98, this data may be relayed back to the mapping system 92. The mapping system 92 utilizes this incoming measurement data to generate respective mapping data points. Accordingly, the mapping system 92 obtains respective mapping data points based on measurement data acquired by the test system 96.

LIST OF REFERENCE NUMBERS

**[0144]** The following represents a list of reference numbers utilized within the appended drawings.

    70: embodiment of the method for mapping.
    72: obtaining seed data.
    74: obtaining a plurality of setpoints.
    76: obtaining a plurality of mapping data points.
    78: generating interpolation data.
    80: embodiment of the method for mapping.
    84: obtaining a plurality of setpoints.
    86: obtaining a plurality of mapping data points.
    90: embodiment of the management system.
    92: mapping system.
    94: automation system.
    96: test system.
    98: device under test, e.g., the first rotary system.

Although particular embodiments have been shown and described, it will be understood that these embodiments are not intended to limit the claimed invention. The specification and drawings are, accordingly, to be regarded in an illustrative rather than a restrictive sense. The claimed invention is intended to cover alternatives, modifications, and equivalents. It should be emphasized that the term 'comprise/comprising' when used in the present disclosure, specifies the presence of stated features, integers, steps, components, etc., but does not necessarily preclude the presence or addition of one or more other features, integers, steps, components, or groups thereof. For any claim enumerating several features, it is conceivable that several of these features may be embodied by one and the same item of hardware and/or software. The mere fact that certain measures are recited in mutually different dependent claims or described in different embodiments does not indicate that a combination of these measures cannot be used to advantage. It will be apparent to those skilled in the art that various modifications and variations can be made to the structure of the invention without departing from the scope of the invention. In view of the foregoing, it is intended that the invention cover modifications and variations of this invention, provided they fall within the scope of the following claims and their equivalents. The scope of the invention should be determined by the claims, with reference signs used in the claims for clarity and not for limitation. Any embodiment or implementation not encompassed by the claims serves to aid understanding of the invention and does not form part of the claimed invention.

**Claims**

1. A computer-implemented method for mapping an operational characteristic of a first rotary system as a function of one or more operation parameters, the method comprising:

    obtaining seed data;
    obtaining a plurality of setpoints;
    obtaining a plurality of mapping data points; and
    generating interpolation data utilizing the plurality of mapping data points,
    the seed data constituting an initial dataset for the operational characteristic as a function of the one or more operation parameters for the first rotary system,
    the plurality of setpoints comprising a first setpoint, a second setpoint, and a third setpoint, each setpoint comprising a component for each of the one or more operation parameters, the plurality of setpoints being obtained utilizing a prediction model, the seed data, and an a priori error setting,
    the plurality of mapping data points comprising a first mapping data point, a second mapping data point, and a third mapping data point, each mapping data point comprising an acquisition data component acquired utilizing one or more measurements of the first rotary system in response to control of the one or more operation parameters of the first rotary system in accordance with a respective setpoint, such that the first mapping data point comprises an acquisition data component acquired in accordance with the first setpoint, the second mapping data point comprises an acquisition data component acquired in accordance with the second setpoint, and the third mapping data point comprises an acquisition data component acquired in accordance with the third setpoint.

2. The method according to claim 1, wherein the step of obtaining the plurality of setpoints comprises:

obtaining the second setpoint utilizing the first mapping data point; and

obtaining the third setpoint utilizing the first mapping data point and the second mapping data point.

3. The method according to claim 1 or 2, wherein the seed data comprises synthetic data derived utilizing a software model of the first rotary system.

4. The method according to any of the preceding claims, wherein the one or more measurements of the first rotary system utilized for acquiring each respective acquisition data component are carried out under a first reference condition, and wherein the seed data comprises first reference data acquired utilizing one or more measurements of the first rotary system under a second reference condition being different from the first reference condition.

5. The method according to any of the preceding claims, wherein the seed data comprises second reference data obtained utilizing one or more measurements of a second rotary system, the second rotary system being different from the first rotary system.

6. The method according to any of the preceding claims, comprising obtaining the prediction model from a plurality of candidate prediction models.

7. The method according to any of the preceding claims, wherein the step of obtaining the plurality of setpoints comprises generating one or more weights for the prediction model.

8. The method according to any of the preceding claims, wherein the step of obtaining the plurality of setpoints comprises optimizing the prediction model by minimizing the number of setpoints of the plurality of setpoints given a constraint defined by the a priori error setting, the constraint comprising a maximum a priori error value.

9. The method according to any of the preceding claims, wherein the step of generating interpolation data comprises utilizing the prediction model in combination with the plurality of mapping data points.

10. The method according to any of the preceding claims, wherein:

the operational characteristic is efficiency;
each setpoint comprises a torque component and a rotational speed component; and
the first rotary system comprises an actuator, such as an electric motor or an internal combustion engine.

11. The method according to any of the claims 1-9, wherein:

the operational characteristic is direct axis inductance, quadrature axis inductance, or torque;
each setpoint comprises a direct axis current component and a quadrature axis current component; and
the first rotary system comprises an electric motor, such as a permanent-magnet synchronous motor.

12. A management method comprising the method according to any of the preceding claims, the management method comprising:

controlling the one or more operation parameters of the first rotary system in accordance with each respective setpoint; and
acquiring each acquisition data component including carrying out the one or more measurements of the first rotary system utilized for acquiring each respective acquisition data component.

13. A management system configured for carrying out the method of claim 12, the management system being configured for accommodating the first rotary system.

14. A computer program comprising instructions which, when the program is executed by a computer, cause the computer to carry out the method of any of the claims 1-11.

15. A computer-readable medium comprising instructions which, when executed by a computer, cause the computer to carry out the method of any of the claims 1-11.

16. A data carrier signal carrying the computer program of claim 14.

Fig. 1

Fig. 2

Fig. 3

Fig. 4

Fig. 5

Fig. 6

Fig. 7

Fig. 8

**EUROPEAN SEARCH REPORT**

**Application Number**

EP 24 20 2186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/102891 A1 (EHARA MASATO [JP]) 27 May 2004 (2004-05-27) * figures 1,3 * * paragraph [0047] * * paragraph [0032] - paragraph [0034] * | 1-16 | INV. G05B17/02 H02P23/14 ADD. G05B13/04 |
| | ----- | | |
| X | WANG XIAOXU ET AL: "Efficiency testing technology and evaluation of the electric vehicle motor drive system", 2014 IEEE CONFERENCE AND EXPO TRANSPORTATION ELECTRIFICATION ASIA-PACIFIC (ITEC ASIA-PACIFIC), IEEE, 31 August 2014 (2014-08-31), pages 1-5, XP032671525, DOI: 10.1109/ITEC-AP.2014.6941059 [retrieved on 2014-10-31] | 1,14-16 | |
| A | * page 3 - page 4 * | 2-13 | |
| | ----- | | |

**TECHNICAL FIELDS SEARCHED (IPC)**

G05B
H02P

The present search report has been drawn up for all claims

| Place of search | Date of completion of the search | Examiner |
|---|---|---|
| The Hague | 7 March 2025 | Antonopoulos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 20 2186

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | Publication date | Patent family member(s) | Publication date |
|---|---|---|---|
| US 2004102891 A1 | 27-05-2004 | DE 10355237 A1 | 24-06-2004 |
| | | GB 2395821 A | 02-06-2004 |
| | | JP 3760911 B2 | 29-03-2006 |
| | | JP 2004178247 A | 24-06-2004 |
| | | US 2004102891 A1 | 27-05-2004 |

EPO FORM P0459

For more details about this annex : see Official Journal of the European Patent Office, No. 12/82